# FASCICULE DE BREVET EUROPEEN

(11) **EP 3 653 922 B1**
(45) Date de publication et mention de la délivrance du brevet: **28.04.2021**
(21) Numéro de dépôt: 19203496.5
(22) Date de dépôt: 16.10.2019
(51) Int. Cl.: F17C 5/02

(54) **INSTALLATION ET PROCÉDÉ DE REMPLISSAGE DE RÉSERVOIRS DE GAZ SOUS PRESSION**
VORRICHTUNG UND METHODE ZUM FÜLLEN VON GASBEHÄLTERN
DEVICE AND METHOD FOR FILLING PRESSURISED GAS VESSELS

(30) Priorité: 15.11.2018 FR 1860536
(43) Date de publication de la demande: 20.05.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: THIEU, Anh Thao, 78350 LES LOGES-EN-JOSAS (FR); CARDON, Guillaume, 78350 LES LOGES-EN-JOSAS (FR)
(74) Mandataire: Air Liquide

(56) Documents cités:
- WO-A1-2017/186337
- FR-A1- 3 005 135
- FR-A1- 3 022 233
- US-A- 5 771 946
- US-B1- 6 354 088

## Description

L'invention concerne une installation et un procédé de remplissage de réservoirs de gaz sous pression.

Une telle installation est connue de US 5 771 946 A.

L'invention concerne plus particulièrement une installation de remplissage de réservoirs de gaz sous pression, en particulier d'hydrogène sous pression, comprenant une source de gaz liquéfié et un circuit de transfert de fluide comprenant une extrémité amont reliée à la source et au moins une extrémité aval destinée à être reliée à un réservoir à remplir, le circuit de transfert comprenant, disposés en série de l'amont vers l'aval, un organe de déplacement du fluide issu de la source vers l'aval, un dispositif de régulation de température configuré pour permettre de réguler la température du fluide entre au moins deux température distinctes, un stockage tampon comprenant une entrée reliée à une sortie du dispositif de réchauffage et une sortie reliée à l'extrémité aval du circuit de transfert, c'est-à-dire que le fluide fourni au réservoir à remplir transite nécessairement par le stockage tampon, l'installation comprenant un organe électronique de stockage et de traitement de données configuré pour commander au moins le dispositif de régulation de température. Pour proposer des stations de recharge de véhicules à hydrogène à capacité élevée, un approvisionnement d'hydrogène liquide est nécessaire. L'approvisionnement de gaz liquéfié liquide fournit également une source d'énergie froide à la station. D'autres sources froides peuvent être aussi disponible sur les stations. Pour le remplissage de véhicules, il faut en effet généralement (pré)refroidir l'hydrogène à -30°C - - 40°C.

Le pré-refroidissement de l'hydrogène avant le remplissage des réservoirs de véhicules est très exigent. Le flux à refroidir est généralement à haute pression (100 - 1000 bar), à débit très variable (0.5 - 3,6kg/min) et avec des températures d'entrée très variables (température ambiante, -20°C à 40°C). Une régulation fine de température est exigée, avec une tolérance de seulement de quelques degrés dans l'intervalle de -40°C à -33°C.

Les flux froids disponibles ont des caractéristiques très différents : très faible température (- 253°C pour l'hydrogène liquide ou dans l'intervalle -193°C à -123°C à la sortie des pompes cryogéniques) ; pression variable débits différents en fonction de l'installation.

Diverses solutions sont connues cf. Wo2017186337A ou US5479966 par exemple.

Ces solutions ne permettent cependant pas une gestion efficace des flux froids et chauds lors de l'utilisation de la station.

Un but de la présente invention est de pallier tout ou partie des inconvénients de l'art antérieur relevés ci-dessus.

A cette fin, l'installation selon l'invention, par ailleurs conforme à la définition générique qu'en donne le préambule ci-dessus, est essentiellement caractérisée en ce que l'organe électronique de stockage et de traitement de données est configuré pour fournir du fluide au stockage tampon à une première température relativement plus élevée pendant que le stockage tampon est soutiré pour remplir un réservoir et pour fournir du fluide au stockage tampon à une seconde température relativement plus basse lorsque le stockage tampon n'est pas soutiré pour remplir un réservoir.

Par ailleurs, des modes de réalisation de l'invention peuvent comporter l'une ou plusieurs des caractéristiques suivantes :
- l'organe de déplacement du liquide comprend une pompe cryogénique,
- le dispositif de régulation de température comprend une portion dédoublée du circuit de transfert comprenant deux conduites en parallèles dont l'une comprend un échangeur de réchauffage du fluide, le dispositif de régulation de température comprenant un ensemble de vanne(s) configuré pour commander la répartition du fluide issu de la source dans les deux conduites parallèles afin de réguler la température du fluide en aval du dispositif de régulation de température,
- le stockage tampon est un réservoir comprenant une isolation thermique,
- le circuit de transfert comprend, en aval du stockage tampon, au moins l'un parmi : une vanne de détente, un échangeur de chaleur configuré pour réguler la température du fluide,

L'invention concerne également un procédé de remplissage de réservoirs de gaz sous pression, en particulier d'hydrogène sous pression, utilisant une installation conforme à l'une quelconque des caractéristiques précédentes ou suivantes, dans lequel le procédé comporte, simultanément à un transfert de fluide vers un réservoir à partir du stockage tampon, une première étape de transfert de fluide au stockage tampon à une première température déterminée.

Selon d'autres particularités possibles :
- le procédé comporte, après un transfert de fluide vers un réservoir à partir du stockage tampon, une seconde étape de transfert de fluide au stockage tampon à une seconde température relativement plus basse que la première température,
- la première température est comprise entre 230K et la température ambiante,
- la seconde température est comprise entre 50 et 150K,
- lors de la première étape de transfert de fluide au stockage tampon, le débit et/ou la température du fluide fourni au stockage est contrôlé pour empêcher la baisse de la pression et/ou la baisse de température au sein du stockage tampon ou pour réduire la baisse de la pression et/ou la baisse de température au sein du stockage tampon en dessous d'une valeur déterminée.

L'invention peut concerner également tout dispositif ou procédé alternatif comprenant toute combinaison des caractéristiques ci-dessus ou ci-dessous dans le cadre des revendications.

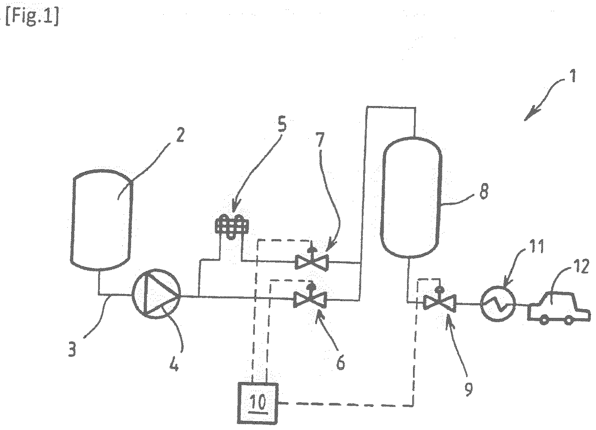

D'autres particularités et avantages apparaîtront à la lecture de la description ci-après, faite en référence à la figure unique qui représente de façon schématique et simplifiée un exemple de structure et de fonctionnement d'une installation selon l'invention.

L'installation 1 comprend une source 2 de gaz liquéfié (par exemple un réservoir isolé sous vide) et un circuit 3 de transfert de fluide comprenant une extrémité amont reliée à la source 2 et au moins une extrémité aval destinée à être reliée à un réservoir 12 à remplir (plusieurs extrémités aval peuvent être envisagées pour remplir plusieurs réservoirs distincts).

Le circuit 3 de transfert comprenant, disposés en série de l'amont vers l'aval, un organe 4 de déplacement du fluide issu de la source vers l'aval (par exemple une pompe), un dispositif 5, 6, 7 de régulation de température configuré pour permettre de réguler la température du fluide entre au moins deux température distinctes et un stockage 8 tampon.

Comme illustré, en aval, le circuit 3 de transfert peut comporter également une vanne 7 de détente et un échangeur 5 de chaleur de régulation de la température avant transfert dans le réservoir 12.

Le stockage 8 tampon comprend une entrée reliée à une sortie du dispositif 5, 6, 7 de réchauffage et une sortie reliée à l'extrémité aval du circuit 3 de transfert. C'est-à-dire que le fluide fourni au réservoir 12 à remplir transite nécessairement par le stockage 8 tampon (en variante plusieurs stockages tampon peuvent être envisagés en parallèle). Le stockage 8 tampon est par exemple un réservoir comprenant une isolation thermique (par exemple un réservoir de type I ou II.

Tout ou partie des organes de l'installation (vannes, pompe...) peuvent être pilotés par un organe 10 électronique de stockage et de traitement de données configuré notamment pour commander au moins le dispositif 5, 6, 7 de régulation de température.

Comme illustré, le dispositif de régulation de température comprend de préférence une portion dédoublée du circuit de transfert comprenant deux conduites en parallèles dont l'une comprend un échangeur 5 de réchauffage du fluide, le dispositif de régulation de température comprenant un ensemble de vanne(s) configuré pour commander la répartition du fluide issu de la source dans les deux conduites parallèles afin de réguler la température du fluide en aval du dispositif de régulation de température. En répartissant le liquide soutiré dans la source 2 entre l'une ou les deux branches parallèles il est possible de contrôler et de faire varier la température du fluide entre une température basse (lorsque tout le flux évite l'échangeur 5 de réchauffage) et une température haute (lorsque tout le flux passe par l'échangeur 5 de réchauffage). Entre ces deux températures une ou plusieurs températures intermédiaires peuvent être atteintes.

Selon une caractéristique avantageuse, l'organe 10 électronique de stockage et de traitement de données peut être configuré pour fournir du fluide au stockage 8 tampon à une première température relativement plus élevée pendant que le stockage tampon 8 est soutiré pour remplir un réservoir 12 et pour fournir du fluide au stockage 8 tampon à une seconde température relativement plus basse lorsque le stockage tampon 8 n'est pas soutiré pour remplir un réservoir 12.

Ainsi, la structure de l'installation peut être relativement simple et peut ne comporter qu'un seul stockage 2 source d'hydrogène liquide, une pompe 4 cryogénique, un petit réchauffeur 5 atmosphérique, un ou des stockages 8 tampon avec un système de régulation simple.

L'hydrogène liquide peut être pompé directement à la température cryogénique dans la source 2 vers le stockage 8 tampon.

Le stockage 8 tampon est de préférence isolé thermiquement et conserve une température froide pour être prêt à fournir l'hydrogène relativement froid à un réservoir 12.

En phase de remplissage d'un réservoir 12, la pompe 4 peut fournir un hydrogène pompé réchauffé par le réchauffeur 5 pour maintenir la pression et la température du stockage tampon 8 pendant son soutirage.

Entre deux remplissage le stockage 8 tampon peut être rempli à nouveau avec du fluide relativement plus froid. Durant cette phase de remplissage, la pompe 4 peut fournir un hydrogène plus froid par la voie qui évite le réchauffeur 5 pour compenser le réchauffement adiabatique de remplissage du stockage 8 tampon.

Ce mode de fonctionnement permet de garder le stockage tampon 8 à température froide presque constante et moindre que la température requise à l'extrémité aval du circuit de transfert (par exemple 200-230K) pour compenser l'effet Joule-Thomson.

Lors d'un remplissage de réservoir 12, le régulateur de température 5 de sortie peut le cas échéant ajuster finement la température du fluide transféré.

Cette structure permet utiliser l'énergie froide à la sortie de la pompe 4 de façon simple et efficace. Ceci ne nécessite en effet pas d'échangeur spécial pour cet effet, ni de pilotage de vanne de contrôle complexe.

Toute la puissance froide de l'hydrogène liquide pompée peut être utilisée. Les consommations électriques restent minimales sur l'éventuel réchauffeur 11 (par exemple électrique) qui ne réalise que des appoints de quelques degrés Celsius par exemple.

Cette architecture et son fonctionnement permet de découpler également le débit de la pompe 4 du débit de remplissage. Ceci permet l'utilisation d'une pompe 4 à relativement petit débit et un contrôle de débit de remplissage simple à partir d'un stockage 8 tampon à haute pression bien connu des stations de remplissage à approvisionnement gazeux.

Le fait de remplir le stockage tampon 8 avec de l'hydrogène réchauffé durant les phases de soutirage de ce dernier permet aussi de maximiser la capacité du stockage tampon 8 et minimisant la chute de pression en son sein.

Le stockage 8 tampon est isolé thermiquement et se maintient ou peut être maintenu à une température relativement basse, par exemple entre 200 et 230K. Le stockage tampon 8 est de préférence isolé thermiquement pour minimiser les déperditions thermiques. Les méthodes d'isolations à cette température sont bien connues. Il doit aussi pouvoir supporter les températures cryogéniques.

De préférence la capacité thermique (ou capacité calorifique) du métal (ou autre matériau) constituant le stockage tampon est au moins deux fois supérieure à la capacité thermique du gaz contenu en son sein pour limiter les variations de pression/température. L'épaisseur d'isolation pourra être calculée en fonction de la capacité thermique totale du système (gaz + stockage tampon).

Ceci permet par exemple de limiter les variations de pression à 30 bar et de température à 10°C après 12 heures de veille avec une isolation mousse inférieure à 10cm d'épaisseur.

Ce stockage 8 est de préférence de type I ou de type II.

Lors d'un remplissage de réservoir 12, l'hydrogène est soutiré du stockage 8 tampon à faible température peut être détendu dans une vanne aval 9 de régulation de remplissage (de type Joule-Thomson par exemple). La température du stockage 8 tampon peut être dimensionnée de telle sorte que cette détente ne chauffe pas l'hydrogène au-dessus de -33°C. Cette température peut être comprise entre 200K et 230K par exemple. Pendant cette phase, l'hydrogène sortant du stockage 8 tampon peut passer ensuite le cas échéant dans un régulateur 5 qui permet d'ajuster finement la température de gaz dirigé vers le pistolet raccordé au réservoir 12 à remplir.

Pendant cette phase de remplissage, la pompe 4 peut participer au remplissage simultané du stockage 8 tampon pour y minimisant la baisse de pression et de température.

Pour ce faire, le fluide en sortie de pompe 4 peut être complètement réchauffée par le réchauffeur ambiant 5 avant de pénétrer dans le stockage 8 tampon.

La vanne 6 correspondante peut rester complètement fermée.

Cette entrée d'hydrogène relativement chaud permet de minimiser la baisse de température et de pression par détente adiabatique dans le stockage 8 tampon.

Avec ce mode de fonctionnement, la pression et la température varient peu dans le stockage 8 tampon lors d'un remplissage de réservoir 12 bien que le débit de la pompe soit bien plus petit que le débit de remplissage, grâce à l'inertie thermique du ou des stockages 8 tampon et grâce à l'apport d'hydrogène relativement chaud.

L'échangeur 11 de chaleur peut être un réchauffeur électrique ou un stockage d'énergie froid à température dans l'intervalle (-33°C à -45°C) par chaleur latente ou chaleur sensible.

Durant la phase de remplissage des stockage 8 tampon (hors remplissage d'un réservoir 12), la pompe 4 peut fournir un hydrogène « semi-cryogénique » au réservoir stockage 8. Ainsi, quand la température du stockage 8 tampon atteint un seuil haut (par exemple entre 220-230K), l'hydrogène liquide de la source 2 peut être pompé jusqu'à la pression du stockage 8 tampon (par exemple une pression comprise entre 400 et 900bar).

Cet hydrogène cryogénique (température par exemple entre 80 et 50K) sortant de la pompe 4 peut être dirigé directement dans le stockage tampon 8 pour le pressuriser. A cette température de remplissage, un stockage 8 peut baisser graduellement en température de l'ordre de (0.5 à 5 K par cycle de remplissage en fonction de la masse métallique du stockage 8). Quand la température du stockage 8 tampon atteint un seuil bas (par exemple autour de 200K), l'hydrogène haute pression de la pompe 4 peut être orienté pour passer par le réchauffeur 5 atmosphérique pour éviter de refroidir excessivement le stockage 8 tampon.

Lors des phases d'inutilisation sans apport de frigorie de l'hydrogène pompé, les déperditions thermiques peuvent faire monter la pression et la température dans le stockage 8 tampon.

La grande inertie thermique du stockage 8 tampon peut permettre en partie de lisser ces variations de température. Par exemple, une isolation simple (de type mousse par exemple) peut suffire à réduire ces déperditions à l'ordre du 50-100W par 100L de stockage tampon 8 à une température entre 200 et 230K. La qualité de l'isolation (épaisseur de l'isolant par exemple) peut être dimensionnée pour assurer que cette élévation de pression et température reste limitée sur un temps de veille spécifiée. Par exemple, on attend typiquement une élévation de moins de 50 bar et moins de 20K pour un temps de veille de l'ordre de 12 heures. La consigne de pression et de température peut aussi prendre une marge vis-à-vis ces élévations.

Le stockage 8 tampon peut avoir une pression consigne de pression 30 à 50 bar moins élevée que sa pression maximale de fonctionnement.

De même, ce stockage 8 tampon peut avoir une température consigne de 10 à 20K en dessous de la température requise pour le remplissage avec effet Joule-Thomson.

Comme évoqué ci-dessus, le stockage 8 tampon peut comprendre plusieurs stockages utilisés en cascade à des niveaux de pression différents (par exemple un pour la pression entre 400 et 700 bar et un autre pour la pression entre 800 à 900 bar). Ceci permet de limiter l'effet Joule-Thomson.

L'invention permet de remplir des réservoirs avec de l'hydrogène sous pression notamment sous forme liquide et/ou gazeuse et notamment sous forme supercritique

## Revendications

1. Installation de remplissage de réservoirs de fluide sous pression notamment du gaz sous pression, en particulier d'hydrogène sous pression, comprenant une source (2) de gaz liquéfié et un circuit (3) de transfert de fluide comprenant une extrémité amont reliée à la source (2) et au moins une extrémité aval destinée à être reliée à un réservoir (12) à remplir, le circuit (3) de transfert comprenant, disposés en série de l'amont vers l'aval, un organe (4) de déplacement du fluide issu de la source vers l'aval, un dispositif (5, 6, 7) de régulation de température configuré pour permettre de réguler la température du fluide entre au moins deux température distinctes, un stockage (8) tampon comprenant une entrée reliée à une sortie du dispositif (5, 6, 7) de réchauffage et une sortie reliée à l'extrémité aval du circuit (3) de transfert, c'est-à-dire que le fluide fourni au réservoir (12) à remplir transite nécessairement par le stockage (8) tampon, l'installation (1) comprenant un organe (10) électronique de stockage et de traitement de données configuré pour commander au moins le dispositif (5, 6, 7) de régulation de température, **caractérisée en ce que** l'organe (10) électronique de stockage et de traitement de données est configuré pour fournir du fluide au stockage (8) tampon à une première température relativement plus élevée pendant que le stockage tampon (8) est soutiré pour remplir un réservoir (12) et pour fournir du fluide au stockage (8) tampon à une seconde température relativement plus basse lorsque le stockage tampon (8) n'est pas soutiré pour remplir un réservoir (12).

2. Installation selon la revendication 1, **caractérisée en ce que** l'organe (4) de déplacement du liquide comprend une pompe cryogénique.

3. Installation selon la revendication 1 ou 2, **caractérisée en ce que** le dispositif (5, 6, 7) de régulation de température comprend une portion dédoublée du circuit (3) de transfert comprenant deux conduites en parallèles dont l'une comprend un échangeur (5) de réchauffage du fluide, le dispositif (5, 6, 7) de régulation de température comprenant un ensemble de vanne(s) (6, 7) configuré pour commander la répartition du fluide issu de la source dans les deux conduites parallèles afin de réguler la température du fluide en aval du dispositif (5, 6, 7) de régulation de température.

4. Installation selon l'une quelconque des revendications 1 à 3, **caractérisée en ce que** le stockage (8) tampon est un réservoir comprenant une isolation thermique.

5. Installation selon l'une quelconque des revendications 1 à 4, **caractérisée en ce que** le circuit (3) de transfert comprend, en aval du stockage (8) tampon, au moins l'un parmi : une vanne (9) de détente, un échangeur (11) de chaleur configuré pour réguler la température du fluide.

6. Procédé de remplissage de réservoirs de fluide sous pression, notamment du gaz sous pression, en particulier d'hydrogène sous pression, utilisant une installation conforme à l'une quelconque des revendications précédentes, dans lequel le procédé comporte, simultanément à un transfert de fluide vers un réservoir (12) à partir du stockage (8) tampon, une première étape de transfert de fluide au stockage (8) tampon à une première température déterminée.

7. Procédé selon la revendication 6, **caractérisé en ce qu'**il comporte, après un transfert de fluide vers un réservoir (12) à partir du stockage (8) tampon, une seconde étape de transfert de fluide au stockage (8) tampon à une seconde température relativement plus basse que la première température.

8. Procédé selon la revendication 7, **caractérisé en ce que** la première température est comprise entre 230K et la température ambiante.

9. Procédé selon l'une quelconque des revendications 6 à 8, **caractérisé en ce que** la seconde température est comprise entre 50 et 150K.

10. Procédé selon l'une quelconque des revendications 6 à 9, **caractérisé en ce que** lors de la première étape de transfert de fluide au stockage (8) tampon, le débit et/ou la température du fluide fourni au stockage est contrôlé pour empêcher la baisse de la pression et/ou la baisse de température au sein du stockage (8) tampon ou pour réduire la baisse de la pression et/ou la baisse de température au sein du stockage (8) tampon en dessous d'une valeur déterminée.

## Patentansprüche

1. Anlage zum Füllen von Behältern mit unter Druck stehendem Fluid, insbesondere Druckgas, insbesondere unter Druck stehendem Wasserstoff, umfassend eine Quelle (2) verflüssigten Gases und einen Fluidübertragungskreis (3), der ein stromaufwärtiges Ende, das mit der Quelle (2) verbunden ist, und mindestens ein stromabwärtiges Ende, das mit einem zu füllenden Behälter (12) verbunden ist, umfasst, der Übertragungskreis (3) umfassend, in stromabwärtiger Richtung in Reihe angeordnet, ein Element (4) zur Bewegung des Fluids aus der Quelle stromabwärts, eine Temperaturregulierungsvorrichtung (5, 6, 7), die dazu ausgebildet ist, die Regulierung der Temperatur des Fluids zwischen mindestens zwei verschiedenen Temperaturen zu gestatten, einen Pufferspeicher (8) mit einem Einlass, der mit einem Auslass der Wärmvorrichtung (5, 6, 7) verbunden ist, und einem Auslass, der mit dem stromabwärtigen Ende des Übertragungskreises (3) verbunden ist, das heißt, dass das Fluid, das dem zu füllenden Behälter (12) zugeführt wird, zwangsläufig den Pufferspeicher (8) durchläuft, wobei die Anlage (1) ein elektronisches Speicherungs- und Datenverarbeitungselement (10) umfasst, das dazu ausgebildet ist, wenigstens die Temperaturregulierungsvorrichtung (5, 6, 7) zu steuern, **dadurch gekennzeichnet, dass** das elektronische Speicherungs- und Datenverarbeitungselement (10) dazu ausgebildet ist, Fluid dem Pufferspeicher (8) mit einer ersten Temperatur zuzuführen, die relativ höher ist, während der Pufferspeicher (8) abgezogen wird, um einen Behälter (12) zu füllen und Fluid dem Pufferspeicher (8) mit einer zweiten Temperatur zuzuführen, die relativ niedriger ist, wenn der Pufferspeicher (8) nicht abgezogen wird, um einen Behälter (12) zu füllen.

2. Anlage nach Anspruch 1, **dadurch gekennzeichnet, dass** das Element (4) zur Bewegung der Flüssigkeit eine kryogene Pumpe umfasst.

3. Anlage nach Anspruch 1 oder 2, **dadurch gekennzeichnet, dass** die Temperaturregulierungsvorrichtung (5, 6, 7) einen geteilten Abschnitt des Übertragungskreises (3) umfasst, der zwei parallele Leitungen umfasst, von denen eine einen Austauscher (5) zur Erwärmung des Fluids umfasst, wobei die Temperaturregulierungsvorrichtung (5, 6, 7) eine Anordnung von Ventil(en) (6, 7) umfasst, die angeordnet ist, die Verteilung des Fluids aus der Quelle in die zwei parallelen Leitungen zu steuern, um die Temperatur des Fluids stromab der Temperaturregulierungsvorrichtung (5, 6, 7) zu regulieren.

4. Anlage nach einem der Ansprüche 1 bis 3, **dadurch gekennzeichnet, dass** der Pufferspeicher (8) ein Behälter mit einer Wärmeisolierung ist.

5. Anlage nach einem der Ansprüche 1 bis 4, **dadurch gekennzeichnet, dass** der Übertragungskreis (3) stromab des Pufferspeichers (8) wenigstens eins von Folgendem umfasst: ein Druckminderventil (9), einen Wärmeaustauscher (11), der dazu ausgebildet ist, die Temperatur des Fluids zu regulieren.

6. Verfahren zum Füllen von Behältern mit unter Druck stehendem Fluid, insbesondere Druckgas, insbesondere unter Druck stehendem Wasserstoff, mithilfe einer Anlage nach einem der vorhergehenden Ansprüche, wobei das Verfahren, gleichzeitig zu einer Übertragung von Fluid vom Pufferspeicher (8) zu einem Behälter (12), einen ersten Schritt des Übertragens von Fluid zum Pufferspeicher (8) mit einer ersten bestimmten Temperatur aufweist.

7. Verfahren nach Anspruch 6, **dadurch gekennzeichnet, dass** es nach einer Übertragung von Fluid vom Pufferspeicher (8) zu einem Behälter (12) einen zweiten Schritt des Übertragens von Fluid zum Pufferspeicher (8) mit einer zweiten Temperatur, die relativ niedriger als die erste Temperatur ist, aufweist.

8. Verfahren nach Anspruch 7, **dadurch gekennzeichnet, dass** die erste Temperatur zwischen 230 K und der Umgebungstemperatur liegt.

9. Verfahren nach einem der Ansprüche 6 bis 8, **dadurch gekennzeichnet, dass** die zweite Temperatur zwischen 50 und 150 K liegt.

10. Verfahren nach einem der Ansprüche 6 bis 9, **dadurch gekennzeichnet, dass** beim ersten Schritt des Übertragens von Fluid zum Pufferspeicher (8) der Durchsatz und/oder die Temperatur des Fluids, das dem Speicher zugeführt wird, gesteuert wird, um den Abfall des Drucks und/oder den Temperaturabfall innerhalb des Pufferspeichers (8) zu verhindern, oder den Abfall des Drucks und/oder den Temperaturabfall innerhalb des Pufferspeichers (8) unter einen bestimmten Wert zu verhindern.

## Claims

1. Installation for filling tanks with pressurized fluid, notably with pressurized gas, particularly with pressurized hydrogen, comprising a source (2) of liquefied gas and a fluid-transfer circuit (3) comprising an upstream end connected to the source (2) and at least one downstream end intended to be connected to a tank (12) that is to be filled, the transfer circuit (3) comprising, arranged in series from upstream to downstream, a member (4) for displacing the fluid coming from the source in the downstream direction, a temperature regulating device (5, 6, 7) configured to allow the temperature of the fluid to be regulated between at least two distinct temperatures, a buffer storage reservoir (8) comprising an inlet connected to an outlet of the heating device (5, 6, 7) and an outlet connected to the downstream end of the transfer circuit (3), which means to say that the fluid supplied to the tank (12) that is to be filled has to pass via the buffer storage reservoir (8), the installation (1) comprising an electronic data processing and storage member (10) configured to control at least the temperature regulating device (5, 6, 7), **characterized in that** the electronic data processing and storage member (10) is configured to supply fluid to the buffer storage reservoir (8) at a relatively higher first temperature while fluid is being withdrawn from the buffer storage reservoir (8) to fill a tank (12), and to supply fluid to the buffer storage reservoir (8) at a relatively lower second temperature when fluid is not being withdrawn from the buffer storage reservoir (8) to fill a tank (12).

2. Installation according to Claim 1, **characterized in that** the liquid displacement member (4) comprises a cryogenic pump.

3. Installation according to Claim 1 or 2, **characterized in that** the temperature regulating device (5, 6, 7) comprises a portion of the transfer circuit (3) which is duplicated, having two parallel pipes one of which comprises an exchanger (5) for warming the fluid, the temperature regulating device (5, 6, 7) comprising a set of valves (6, 7) configured to dictate the distribution of the fluid coming from the source into the two parallel pipes so as to regulate the temperature of the fluid downstream of the temperature regulating device (5, 6, 7).

4. Installation according to any one of Claims 1 to 3, **characterized in that** the buffer storage reservoir (8) is a tank comprising thermal insulation.

5. Installation according to any one of Claims 1 to 4, **characterized in that** the transfer circuit (3) comprises, downstream of the buffer storage reservoir (8), at least one of the following: an expansion valve (9), a heat exchanger (11) configured to regulate the temperature of the fluid.

6. Method for filling tanks with pressurized fluid, notably with pressurized gas, particularly with pressurized hydrogen, using an installation according to any one of the preceding claims, in which the method comprises, simultaneously with a transfer of fluid towards a tank (12) from the buffer storage reservoir (8), a first step of transferring fluid to the buffer storage reservoir (8) at a determined first temperature.

7. Method according to Claim 6, **characterized in that** it comprises, after a transfer of fluid to a tank (12) from the buffer storage reservoir (8), a second step of transferring fluid to the buffer storage reservoir (8) at a second temperature relatively lower than the first temperature.

8. Method according to Claim 7, **characterized in that** the first temperature is comprised between 230K and ambient temperature.

9. Method according to any one of Claims 6 to 8, **characterized in that** the second temperature is comprised between 50 and 150K.

10. Method according to any one of Claims 6 to 9, **characterized in that**, during the first step of transferring fluid to the buffer storage reservoir (8), the flow rate and/or the temperature of the fluid supplied to the storage facility is controlled in order to prevent a drop in pressure and/or a drop in temperature within the buffer storage reservoir (8) or in order to reduce the drop in pressure and/or the drop in temperature within the buffer storage reservoir (8) below a determined value.
